# EUROPEAN PATENT APPLICATION

(11) **EP 2 361 716 A1**
(43) Date of publication of application: **31.08.2011**
(21) Application number: 11154725.3
(22) Date of filing: 16.02.2011
(51) Int. Cl.: B23K 26/06, B23K 26/08, A24C 5/60

(54) **Piercing device for making ventilation holes in cigarettes or similar tobacco products**

(30) Priority: 25.02.2010 IT BO20100109
(71) Applicant: G.D S.p.A., 40133 Bologna (IT)
(72) Inventor: Gamberini, Giuliano, 40014, CREVALCORE ( Bologna) (IT); Zanetti, Umberto, 41100, MODENA (IT)
(74) Representative: Ghioni, Carlo Raoul Maria

(57) **Abstract**

A piercing device for making ventilation holes in cigarettes or similar tobacco products comprises a drum (5) rotatable about a first axis (9) and equipped with a plurality of peripheral seats (4) rotatable about respective axes which are parallel with the first axis (9), each designed to accommodate and transfer one cigarette (3) along a piercing path (P); the device comprises at least one laser source (7) for emitting a laser beam (8), and a unit (30) for focusing the beam (8) for the purpose of making holes (2) in the cigarettes (3); the focusing unit (30) comprises at least one cylindrical lens (28) and a scanning unit (29) for making the laser beam (8) scan the cylindrical lens (28); the cylindrical lens (28) is positioned directly facing the path (P) along which the cigarettes (3) are pierced, and is interposed between the cigarettes (3) and the scanning unit (29).

## Description

This invention relates to a piercing device for making ventilation holes in cigarettes or similar tobacco products.

To make cigarettes with ventilation holes, piercing devices must be used, whose piercing tool is a laser.

According to Italian patent No. 1.168.682 a piercing device is used for making ventilation holes in cigarettes while the cigarettes are supported in respective seats rotatably mounted on a feed drum able to rotate about its own axis. According to that patent, the piercing device comprises a laser source designed to emit a laser beam along the axis of rotation of the feed drum and an optical reflection and focusing system designed to divert a beam emitted by the laser source and to focus it on predetermined points of the surface of each cigarette while the cigarette rotates about its own axis supported by the respective seat.

The above-mentioned optical system comprises mobile equipment able to rotate about the axis of rotation of the feed drum, and in turn comprising two mirrors, the first positioned on said axis of rotation to divert the beam outwards, and the second designed to receive the beam reflected by the first and to divert it inwards in such a way as to strike a reflector element.

The reflector element is coupled to the feed drum motor so that it rotates at the same speed as the drum and comprises a plurality of faces, having a reflecting surface or mirror, the number of said faces being equal to the number of seats.

Therefore each face is associated with a respective seat, in such a way that it is facing a filter of a respective cigarette projecting cantilever-style from the feed drum.

Before reaching the reflector element the beam diverted inwards by the second mirror passes through a spherical focusing lens, which is part of the mobile equipment and is angled in such a way that it focuses the beam, in the absence of the reflector element, on a point or focal point of the axis of rotation of the feed drum.

That virtual point or focal point is fixed whatever the angular position adopted by the mobile equipment about the axis of rotation of the drum. To make the following description easier to understand, it is important to remember that, according to a law of optics, if a beam of light is focused at a point by a focusing device, and that point remains fixed in space even if the focusing device is moved in space along any trajectory, any deflection of the focused beam of light using a fixed mirror results in the creation of a reflected focal point which, like the original focal point, remains fixed in space even if the position of the focusing device changes.

Similarly, if the deflection is performed using a mirror which rotates about an axis at a constant speed, the reflected focal point will no longer be fixed in space, but it will also rotate about the axis at the same speed as the respective deflecting mirror.

In light of such principles, since in the absence of the reflector element mirrors the laser beam is focused at the above-mentioned fixed point, if a reflector element mirror is interposed, the laser beam is focused at a point located on the surface of the filter of the cigarette associated with the above-mentioned mirror and which is symmetrical, relative to the mirror, of the virtual focal point. Since the mirror has the same speed of rotation as the drum and therefore as the cigarettes, the focal point also rotates at the same speed about the above-mentioned axis, remaining substantially fixed relative to the respective cigarette for the entire time needed by the beam to sweep or scan the mirror, and then suddenly moves to a new point on the surface of an adjacent cigarette when the beam begins scanning a new mirror.

Consequently, the reflector element mirrors make the laser beam pulse, the effect being to cyclically localise the beam focal point at n points distributed along the piercing arc and to make, for each complete revolution by the mobile equipment about its axis, a hole in the filter of each cigarette present along the piercing arc.

The configuration of the piercing devices of the type described is such that the focal distance of the spherical lens is relatively high, since the spherical lens is positioned at a relative long distance from the focal point, that is to say, from the filters in the seats of the drum.

Said long focal distance results in the production of holes with a relatively large diameter and, therefore, insufficient radiation power of the piercing devices described.

Moreover, in the case of such long focal distances, the Gaussian curve of the distribution of radiation power of the laser beam is quite flat, indicating insufficient capacity for making holes with a cleanly-cut outline and of uniform depths.

It should be noticed that said disadvantage cannot be resolved by transferring the focusing lens downstream of the reflector element, that is to say, to a position closer to the seats of the drum, since in such a case the result of the laser beam scanning each mirror would be a focal point that is not fixed, but which moves relative to the respective seat and consequently cannot make the hole in the filter.

The aim of this invention is to provide a piercing device for making ventilation holes in cigarettes or similar tobacco products which is able to overcome the above-mentioned disadvantages of the prior art.

That aim is achieved by a piercing device comprising the features described in one or more of the appended claims.

In particular, the piercing device comprises:
- a drum able to rotate about a first axis and equipped with a plurality of peripheral seats rotating about respective axes which are parallel with the first axis and each designed to accommodate and transfer one cigarette along a piercing path;
- at least one laser source for emitting a laser beam and means for focusing the beam for making holes in the cigarettes;
the device being characterised in that the focusing means comprise at least one cylindrical lens and a unit which makes the laser beam scan the cylindrical lens; the cylindrical lens directly facing the cigarette piercing path, in a position close to the path, and being interposed between the cigarettes and the scanning unit.

The cylindrical lens directly facing the cigarette piercing path is preferably placed at a distance of 30 mm or less from the path.

The distance is preferably equal to 24 mm.

The piercing device preferably comprises a reflector element, coaxial and integral with the drum, equipped with a plurality of reflecting faces, each facing a respective seat and designed to reflect the beam towards a respective seat, and a further cylindrical lens; the further cylindrical lens, or first cylindrical lens, and the cylindrical lens directly facing the cigarette piercing path, or second cylindrical lens, being positioned respectively upstream and downstream of the reflector element along the line and direction of the beam.

The first and second cylindrical lenses preferably focus the beam along two axes which are at right angles to each other.

In particular, the laser beam is directed coaxially along the first axis and the scanning unit comprises a first mirror for reflecting the beam along a second axis which is substantially radial relative to the drum, a second mirror for reflecting the laser beam facing the first mirror and angled towards the first axis of the drum for reflecting the beam towards the first axis along a respective third axis, a reflector element coaxial and integral with the drum, comprising a plurality of reflecting faces, each facing a respective seat and designed to reflect towards a respective seat the beam reflected by the second mirror, and a further cylindrical lens interposed, along the third axis, between the second mirror and the reflector element.

In particular, the mirrors and the cylindrical lenses form optical equipment which rotates about the first axis.

In particular, the cylindrical lens directly facing the cigarette piercing path is interposed between the cigarettes and the reflector element.

The first cylindrical lens is preferably designed to focus the beam in a line towards the first axis, and the second cylindrical lens is designed to focus the beam on a focal point on the cigarettes. Further features and advantages of this invention are more apparent in the description below, with reference to a preferred, non-limiting, embodiment of the piercing device, illustrated in the accompanying drawings, in which:
- Figure 1 is a schematic perspective view of a preferred embodiment of a piercing unit made in accordance with this invention;
- Figure 2 is a schematic side view, with some parts in cross-section, of the unit of Figure 1; Figure 3 is an enlarged view of a detail from Figure 2.

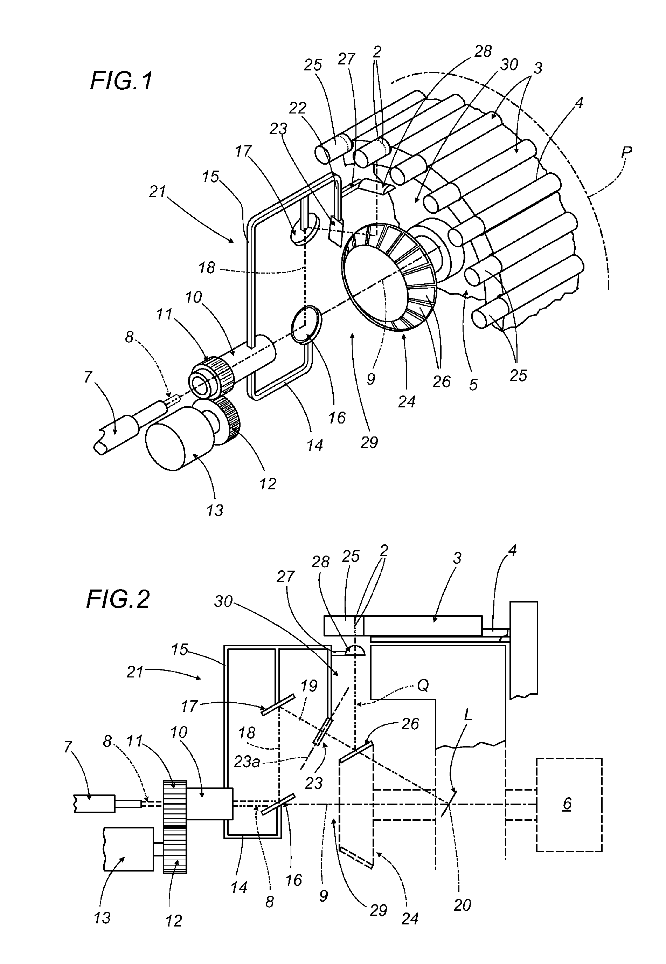

Figures 1 and 2 schematically illustrate a piercing unit or piercing device, labelled 1 in its entirety and designed to make a ring of holes or perforations 2 in a plurality of cigarettes 3.

Each cigarette 3 is partly housed in a respective seat 4, positioned on the outside of a feed drum 5 which is rotatably driven by a motor 6 about its own axis with a first, preferably constant, speed. The unit 1 comprises, in addition to the drum 5, at least one laser source 7 designed to emit a laser beam 8, having a substantially circular cross-section, along an axis 9 coinciding with the axis of rotation of the drum 5.

The unit 1 also comprises a tubular body 10 mounted in such a way that it can rotate about its own axis coinciding with the axis 9.

The tubular body 10 comprises an outer ring gear 11, which meshes with an output transmission 12 of a motor 13 designed to impart to the tubular body 10 a second speed which can be changed as required. According to an alternative embodiment of the tubular body 10 it is coaxial with and directly connected to the output shaft of the motor 13. Extending from the end of the tubular body 10 facing the drum 5 there are two arms 14 and 15 supporting respective mirrors 16 and 17, the first designed to intercept the beam 8 as it comes out of the body 10 and to divert it outwards towards the mirror 17, along an axis 18 which is substantially perpendicular to the axis 9.

As illustrated in Figure 2, the mirror 17 is angled in such a way as to divert the beam 8 along an axis 19 which intersects the axis 9 at a point 20.

The numeral 21 denotes in its entirety mobile equipment, rotating about the axis 9, comprising the tubular body 10, the arms 14, 15 and the mirrors 16 and 17.

Also part of the mobile equipment 21, supported along the axis 19 by an arm 22 which is integral with the arm 15, there is a cylindrical lens 23, whose axis 23a is coplanar with the plane formed by the axes 18 and 19 and at a right angle to the axis 19.

It should be noticed that the structure described above is indicated by way of example only, the assembly comprising the tubular body 10 and the arms 14, 15 and 22 together providing a schematic representation of a support for the mirrors 16 and 17 and for the lens 23, the assembly being driven to rotate about the axis 9.

As it passes through the lens 23, the circular cross-section of the beam 8 is deformed into an ellipse, until it focuses, in the absence of further beam 8 diversions, substantially in a line L intersecting, through the point 20, the axis 9 of the drum 5.

The device 1 also comprises a prismatic reflector element 24, positioned coaxial with the axis 9.

The reflector element 24 is coupled to the motor 6 so that it rotates about the axis 9 at the same speed as the drum 5, and it comprises a plurality of faces, the number of faces being equal to the number of seats 4. The faces have a trapezoidal shape.

Each face of the reflector element 24 has a reflecting surface or mirror 26, facing towards a respective filter 25 projecting cantilever-style from the drum 5.

Each mirror 26, when struck by the beam 8 focused with an elliptical cross-section coming out of the cylindrical lens 23, diverts it outwards in a substantially radial direction towards the surface of the respective filter 25.

The mobile equipment 21 also comprises, close to the seats 4, supported by an arm 27 integral with the arm 15, a second cylindrical lens 28.

The lenses 23 and 28 focus the beam along two axes which are at right angles to each other.

Again in this case, the arm 27 is simply a schematic representation of a supporting element. The cylindrical lens 28 is directly facing the piercing path P for the cigarettes 3, in a position close to the path P. In particular, the lens 28 is at a distance of 30 mm or less from the path P.

The distance is preferably equal to 24 mm. Consequently, the lens 28 has a reduced focal distance.

The second cylindrical lens 28 is designed to intercept the beam coming out of the cylindrical lens 23, diverted by the reflector element 24, and to focus it on a point or focal point on the filter 25. As shown in Figure 2, each seat 4 is positioned parallel with the axis 9 of the drum 5, which is of the type described and illustrated in Italian patent No. 1.168.682, referred to here in its entirety in order to provide a complete description.

Each seat 4 is connected, by a transmission of the known type and not illustrated, to the motor 6 so that it can rotate relative to the drum 5 about the axis 9, and impart to the cigarette 3 a rotary movement about the cigarette axis during movement by the drum 5.

In practice, the filters 25 of the cigarettes 3 are pierced as the cigarettes 3 are fed transversally, at the first constant speed, along an arc with predetermined amplitude of less than 360° forming the piercing path P, which normally extends between a position (not illustrated) for loading the cigarettes 3 on the drum 5, and a position (not illustrated) for unloading the pierced cigarettes 3 from the drum 5.

According to what is described in Italian patent No. 1.168.682, the cigarettes 3 are fed transversally along the piercing path P, rotating with a constant speed about their axis and completing, from the start to the end of the path P, a predetermined finite number of complete revolutions.

During piercing, the mobile equipment 21 rotates about the axis 9 in the opposite direction and with its speed regulated according to the number of holes 2 to be made by piercing each cigarette 3.

As already indicated, the laser beam 8 emitted by the laser source 7 along the axis 9, coinciding with the axis of rotation of the drum 5, has a substantially circular cross-section.

The laser beam 8 maintains that configuration after it has been diverted by the mirrors 16 and 17 of the mobile equipment 21, the first of which is designed to intercept the beam 8 as it comes out of the body 10 and to divert it outwards onto the mirror 17 along the axis 18, in a direction substantially perpendicular to the axis 9 and the second towards the reflector element 24 and through the cylindrical lens 23 along the axis 19.

As it passes through the cylindrical lens 23, whose axis, as indicated, is coplanar with the plane formed by the axes 18 and 19, the beam 8 is transversally compressed, in such a way that its cross-section becomes substantially elliptical, until it is substantially focused in a virtual fixed line L intersecting the axis 9, or slightly away from it, as described below.

Due to the presence of the reflector element 24 the beam coming out of the first cylindrical lens 23 is diverted by a mirror 26 towards the second cylindrical lens 28.

After that step, the laser beam 8, with its elliptical cross-section with the larger axis parallel with the axis of the cigarettes 3, is focused substantially on a focal point S incident on the surface of the filter 25 of the cigarette 3 associated with that mirror 26.

Since the mirror 26 rotates about the axis 9 at the same speed as the drum 5 and therefore at the same speed as the cigarettes 3, the focal point S also rotates at the same speed about the axis 9, remaining substantially fixed relative to the respective cigarette 3 for the entire time needed by the beam 8 to scan the mirror 25.

The focal point S then suddenly moves to a new point S on the surface of an adjacent cigarette 3, when the beam 8 starts scanning a new mirror 26. From what is described above, it may be inferred that the mirrors 26 make the beam 8 pulse, the effect of this being that the focal point of the beam 8 is cyclically localised at n points distributed along the piercing path P.

To highlight the advantages of the device according to this invention, it is important to remember that, according to a law of optics, already described above, if a beam of light is focused by a focusing device and the relative focal point remains fixed in space despite the focusing device being moved in space along any trajectory, any deflection of the focused beam of light using a fixed mirror results in the creation of a reflected focal point which, like the original focal point, remains fixed in space when the position of the focusing device changes.

Similarly, if, as in this case, the deflection is performed using a mirror which rotates about an axis at a constant speed, the reflected focal point will no longer be fixed in space, but it will also rotate about the axis at the same speed as the respective deflecting mirror.

If the device 1 is examined in light of the above principles and it is considered that, in the absence of the mirrors 26 of the reflector element 24, the beam 8 is always focused, by the cylindrical lens 23, along the line L on the axis 9, then by interposing a mirror 26, the beam 8 is focused, in the absence of the second cylindrical lens 28, on the cylindrical surface of the filter 25 of the cigarette 3 associated with said mirror 26 in a line L parallel with the axis of the cigarette 3.

The second cylindrical lens downstream of the reflector and, as already indicated, in a position extremely close to the seats 4, focuses the beam 8 reflected by the respective mirror 26 in such a way as to reduce the line L substantially to a focal point S.

Focusing of the beam 8 into the focal point S is therefore achieved in two steps, using the cylindrical lens 23 and the cylindrical lens 28, the lenses being positioned respectively upstream and downstream of the reflector element 24 along the line and direction of the beam 8.

The lenses 23 and 28 focus the beam along two axes which are at right angles to each other.

It should be noticed that the laser beam coming out of the second cylindrical lens 28, during the scanning of the mirror 26 by the beam 8, unlike what would happen if using a spherical lens, makes it possible to obtain a focal point that is fixed relative to the respective filters 25. This is due to a neutral focusing action by the lens 28 relative to its scanning by the beam 8. In contrast, the focusing action of the lens 28 occurs in the direction at a right angle to the above-mentioned direction of neutral action.

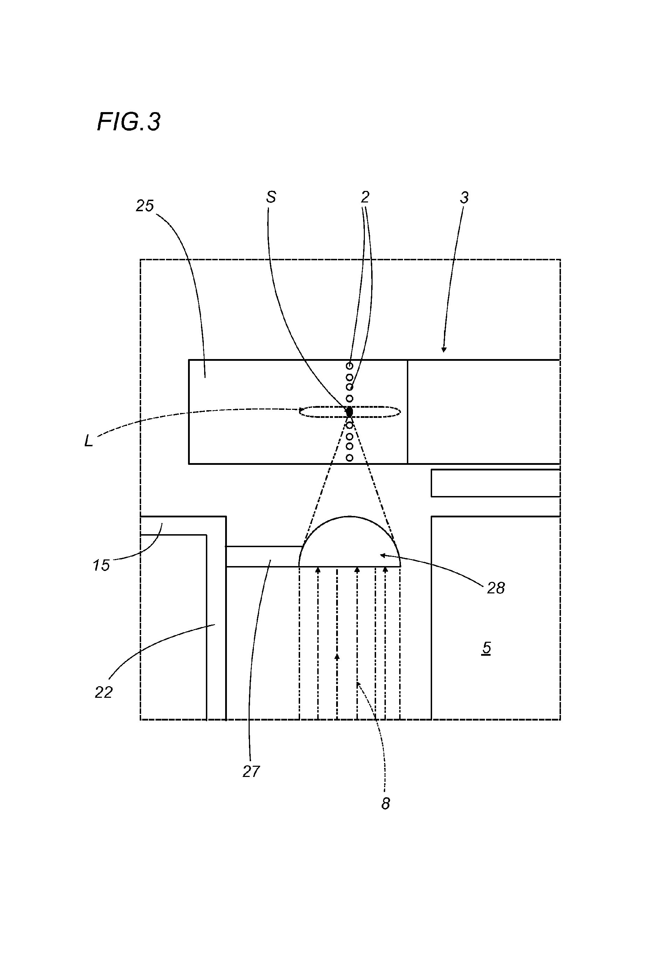

In particular with reference to Figure 3, in reality the laser beam 8, when passing through the second cylindrical lens 28, is transformed from a beam having an elliptical cross-section whose larger axis is parallel with the axis of the cigarette 3, into a focal point S having a shape which is slightly elongate along an axis substantially transversal to the axis of the cigarette 3.

It should also be noticed that the focal point S is defined relative to its longitudinal edges, which are transversal to the axis of the cigarette 3, that is to say, most of its outline, by the cylindrical lens 28, positioned extremely close to the filters 25 and therefore selected with an extremely reduced focal distance.

Said reduction in the focal distance compared with that of the single spherical lens used in the prior art allows smaller holes to be made and greater radiation, for the given power of the laser generator. In short, the reduction of the focal distance allows the obtainment of smaller holes 2 with an extremely cleanly-cut outline and of substantially uniform depth.

Since the mirror 26 of the reflector 24 rotates about the axis 9 at the same speed as the drum 5 and, therefore, at the same speed as the cigarette 3, the point S also rotates at the same speed about the axis 9, remaining substantially fixed relative to the respective cigarette 3 for the entire time needed by the beam 8 to scan the mirror 26, and then suddenly moves to a new point S of the surface of an adjacent cigarette 3 when the beam 8 starts to scan a new mirror 26.

As a result of what has been described, the mirrors 16 and 17, the first cylindrical lens 23, together with the reflector 24, together form a scanning unit 29 for the second cylindrical lens 28 using the beam reflected by each mirror 26.

In other words, the cylindrical lens 28 directly facing and extremely close to the piercing path P for the cigarettes 3 is interposed between a scanning unit 29 and the cigarettes 3.

Moreover, the two mirrors 16 and 17, the reflector element 24 and the two cylindrical lenses 23 and 28 form focusing means, labelled 30 as a whole, for focusing the laser beam 8 on the cigarettes 3.

The path of the laser beam 8 from the mirror 16 to the cigarettes 3 is called the focusing path and is labelled Q.

According to an alternative embodiment of the device according to this invention, not illustrated, the mirror 16 which reflects the beam 8 outwards is substituted by a semi-transparent mirror and by a further mirror placed behind the latter, both being designed to split the beam 8 directed along the axis 9 into two equal cylindrical beams, which are directed radially outwards in directions which are diametrically opposed. Each of the two beams strikes a respective mirror 17 and passes through respective lenses 23 and 28.

Said device operates in the same way as the device described above and illustrated in Figures 1 and 2. The only difference relative to the first embodiment described is the fact that two holes 2 are made in two cigarettes 3 simultaneously. Consequently, the laser source, to be coupled to the device, must have an output power roughly double that of the device 1, whilst the tubular body 10 supporting the two rotary equipment assemblies must be rotated at a speed which, the number of holes 2 to be made in the cigarettes 3 being equal, is around half the speed of the mobile equipment 21.

According to another embodiment, the lens 23 is again positioned upstream of the reflector 24 along the line and direction of the beam 8, but also upstream of the mirror 17 or, alternatively, upstream of the mirror 16.

With reference to what was previously observed, the focal point S follows the cigarette 3 associated with a respective mirror 26 for a predetermined angular travel of the cigarette 3 about the axis 9. However, since during rotation about the axis 9 the cigarette 3 also rotates about its own axis, the above-mentioned focal point S does not remain perfectly fixed relative to the surface of the respective cigarette 3, but travels along an arc with predetermined amplitude on the cigarette.

The holes 2 therefore have the shape of a slot which is elongate transversally to the axis of the cigarette 3.

To avoid this disadvantage and to ensure that each focal point S moves with the respective cigarette 3, also accompanying it in its rotation about its own axis for the entire time during which the hole 2 is made, the angle of both the mirror 17, and of the focal axis of the cylindrical lens 23 is modified in such a way as to define, in the absence of the reflector 23, a focal line L positioned at a predetermined distance from the axis 9.

Following rotation of the mobile equipment 21 the focal line L does not remain fixed in space, as in the embodiment described, but rotates about an axis intersecting the axis 9.

Consequently, similarly to what is described and illustrated in Italian patent No. 1.168.682, the focal point S of the second cylindrical lens 28 also moves in space, during the period of time in which the beam 8 scans each mirror 26, together with the respective cigarette 3 for the entire piercing time, so that during the step of following the cigarette 3, a substantially circular hole 2 is made.

It should be noticed that the laser beam 8 emitted by the laser source 7 may be continuous or pulsing intermittent, with timing substantially coinciding with the timing of the piercing of the cigarettes 3.

## Claims

1. A piercing device for making ventilation holes in cigarettes or similar tobacco products, the device comprising a drum (5) rotatable about a first axis (9), the drum (5) being equipped with a plurality of peripheral seats (4) rotatable about respective axes which are parallel with the first axis (9), each designed to accommodate and transfer one cigarette (3) along a piercing path (P); at least one laser source (7) for emitting a laser beam (8), and means (30) for focusing the beam (8) for the purpose of making holes (2) in the cigarettes (3); the device being **characterised in that** the focusing means (30) comprise at least one cylindrical lens (28) and a scanning unit (29) for making the laser beam (8) scan the cylindrical lens (28); the cylindrical lens (28) being positioned directly facing the path (P) along which the cigarettes (3) are pierced, and interposed between the cigarettes (3) and the scanning unit (29).

2. The piercing device according to claim 1, **characterised in that** the cylindrical lens (28) facing directly towards the path (P) along which the cigarettes (3) are pierced is placed at a distance of 30 mm or less from that path (P).

3. The piercing device according to claim 2, **characterised in that** the distance is 24 mm.

4. The piercing device according to any of claims from 1 to 3, **characterised in that** it comprises a reflector element (24), coaxial and integral with the drum (5) and equipped with a plurality of reflecting faces (26), each facing a respective seat (4) and designed to reflect the beam (8) towards a respective seat (4), and a further cylindrical lens (23); the further cylindrical lens (23), or the first cylindrical lens (23), and the cylindrical lens (28) facing directly towards the path (P) along which the cigarettes (3) are pierced, or the second cylindrical lens (28), being positioned respectively upstream and downstream of the reflector element (24) along the line and direction of the beam (8).

5. The piercing device according to claim 4, **characterised in that** the beam is focused by the first cylindrical lens (23) and the second cylindrical lens (28) along two axes at right angles to each other.

6. The piercing device according to any of the claims from 1 to 3, **characterised in that** the laser beam (8) is directed coaxially along the first axis (9), and the scanning unit (29) comprises a first mirror (16) for reflecting the beam (8) along a second axis (18) extending in a substantially radial direction relative to the drum (5), a laser beam (8) second mirror (17) facing the first mirror (16) and angled towards the first axis (9) of the drum (5), for reflecting the beam (8) towards the first axis (9) along a respective third axis (19), a reflector element (24) coaxial and integral with the drum (5) and comprising a plurality of reflecting faces (26), each facing a respective seat (4) and designed to reflect the beam (8) reflected by the second mirror (17) towards a respective seat (4), and a further cylindrical lens (23) positioned upstream of the reflector element (24) along the line and direction of the beam (8).

7. The piercing device according to claim 6, **characterised in that** the mirrors (16, 17) and the cylindrical lenses (23, 28) combine to create an assembly of optical equipment (21) rotatable about the first axis (9).

8. The piercing device according to any of the foregoing claims from 4 to 7, **characterised in that** the cylindrical lens (28) facing directly towards the path (P) along which the cigarettes (3) are pierced is interposed between the cigarettes (3) and the reflector element (24).

9. The piercing device according to any of the foregoing claims from 4 to 8, **characterised in that** the first cylindrical lens (23) is designed to focus the beam (8) in a line (L) towards the first axis (9), and the second cylindrical lens (28) is designed to focus the beam (8) into a focal point (S) on the cigarettes (3).
